# EUROPEAN PATENT SPECIFICATION

(11) **EP 2 546 997 B1**
(45) Date of publication and mention of the grant of the patent: **18.02.2015**
(21) Application number: 11170232.0
(22) Date of filing: 16.06.2011
(51) Int. Cl.: H04B 5/00, H04B 1/38

(54) **Mobile wireless communications device to authenticate a removable power source via NFC communications and associated methods**
Mobile drahtlose Kommunikationsvorrichtung zur Authentifizierung einer entfernbaren Stromquelle über NFC-Kommunikation und zugehörige Verfahren
Dispositif mobile de communications sans fil pour authentifier une source d'alimentation amovible via des communications NFC et procédés associés

(43) Date of publication of application: 16.01.2013
(73) Proprietor: BlackBerry Limited, Waterloo, ON N2K 0A7 (CA)
(72) Inventor: Khan, Gabriel Deen, Waterloo, Ontario N2T 2T6 (CA)
(74) Representative: Finnie, Peter John

(56) References cited:
- EP-A1- 2 219 353
- EP-A2- 1 804 393
- WO-A1-00/79771
- US-A1- 2010 293 613

## Description

### Technical Field

The present disclosure relates to the field of mobile wireless communications devices, and, more particularly, to mobile wireless communications devices including Near Field Communications (NFC) circuits.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multifunction devices also allow users to send and receive electronic mail (e-mail) messages wirelessly and access the Internet via a cellular network and/or a wireless local area network (WLAN), for example. In addition, these devices may allow users to send Short Messaging Service (SMS) messages, Personal Identification Number (PIN) messages, and instant messages.

Given the wide variety of functions now performed by such mobile wireless communications devices, power consumption has become an issue. The typical mobile wireless communications device is now used throughout the day, and not merely for making and receiving voice calls. As such, manufacturers have invested considerable money in the design and manufacture of batteries for their mobile wireless communications devices, and may like a way to prevent batteries manufactured by third parties from working with their devices, for a variety of reasons. For example, many mobile wireless communications devices come with a warranty, and a poorly designed third party battery may damage the device. Likewise, a poorly designed third party battery may not allow the device to operate optimally, decreasing a customer's satisfaction with the device.

Consequently, a mobile wireless communications device able to authenticate a battery installed therein is desirable.

D1 (US 2010/0293613) is directed to a mobile communications device for providing a user with access to information relating to authorized take-up of a service for which authorization is provided using a contactless smart-card device. The device includes a plurality of personal information managers, each having a data store comprising a plurality of data fields. The device is configured to access an interface for receiving data from the smart-card device and a parser arranged to parse the received data so as to identify content therein and to identify, from the parsed content, content portions corresponding to at least some of said plurality of data fields. An application manager is provided to select a personal information manager on the basis of the identified content. The application manager is arranged to provide the selected personal information manager with said identified content portions so as to update the selected personal information manager with parameters accompanying the taken-up service.

According to a first aspect, there is provided a mobile wireless communications device as set out in Claim 1.

According to a second aspect, there is provided a mobile wireless communications device as set out in Claim 11.

### Brief Description of the Drawings

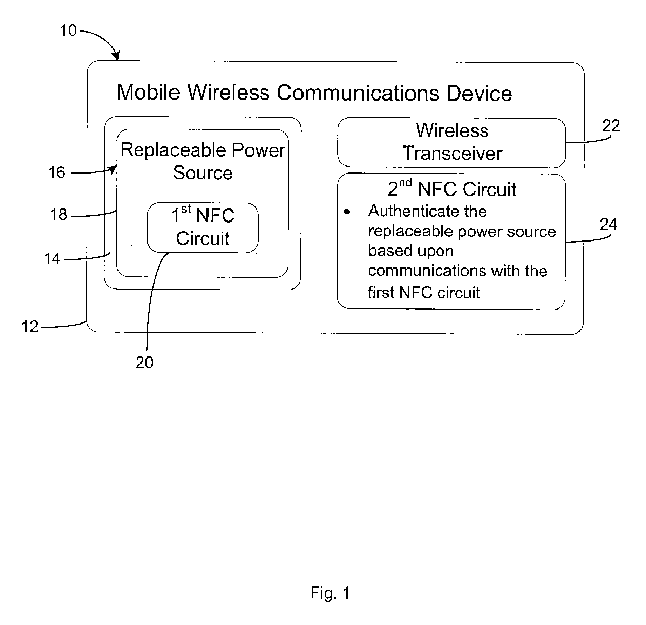

FIG. 1 is a schematic block diagram of a mobile

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a mobile wireless communications device may comprise a housing, a wireless transceiver carried by the housing, and a removable power source capable of being carried by the housing. The removable power source may comprise a first Near Field Communications (NFC) circuit. A second NFC circuit may be carried by the housing, and may be configured to authenticate the removable power source based upon communication with the first NFC circuit.

A processor may be carried by the housing and may be coupled to the second NFC circuit. The processor may be configured to switch from a locked state to an unlocked state based upon a successful authentication of the removable power source. In addition, the processor may be configured to switch from an unlocked state to a locked state based upon an unsuccessful authentication of the removable power source.

In some applications, the processor may be configured to cooperate with the wireless transceiver to place an emergency call when the processor is switched to a locked state. A display may be carried by the housing, and the processor may be configured to cooperate with the display to display an error message when switched to a locked state.

The removable power source and the processor may exchange handshake communications. The handshake communications may comprise a security code.

There may be an electrical conduction communication path between a first processor coupled to the first NFC circuit and a second processor carried by the housing for additional authentication of the removable power source. The housing may define a cavity capable of receiving the removable power source, and the removable power source may be removably positioned within the cavity.

The removable power source may further comprise a sealed battery casing containing the first NFC circuit, and at least one rechargeable battery cell carried by the sealed battery casing.

Another aspect is directed to a removable power source capable of powering a mobile wireless communications device. The removable power source may include a first Near Field Communications (NFC) circuit configured to authenticate the mobile wireless communications device based upon communication with a second NFC circuit thereof. The removable power source may comprise a battery, in some applications. In further applications, the removable power source may comprise a fuel cell.

A method aspect is directed to a method on a mobile wireless communications device having a housing carrying a wireless transceiver and a removable power source, the removable power source comprising a first Near Field Communications (NFC) circuit. The method may comprise authenticating the removable power source based upon communications between a second NFC circuit carried by the housing and the first NFC circuit.

With initial reference to FIG. 1, a mobile wireless communications device **10** in accordance with the present disclosure is now described. Example mobile wireless communications devices may comprise portable or personal media players (e.g., MP3 players, video players, electronic book readers, etc.), remote controls (e.g., television or stereo remotes, etc.), portable gaming devices, portable or mobile telephones, smartphones, tablet computers, laptop computers, etc. The mobile wireless communications device **10** includes a housing **12** that defines a removable power source receiving cavity **14.** A removable power source **16** is removably positioned within the removable power source receiving cavity **14.** The removable power source **16** may be a rechargeable battery, a fuel cell or any other form of energy storage or generation system, for example, and includes a first near field communications (NFC) circuit **20.**

The mobile wireless communications device **10** also includes a wireless transceiver **22**, such as a cellular transceiver, and a second NFC circuit **24**. The second NFC circuit **24** is configured to authenticate the removable power source **16** based upon communications with the first NFC circuit **20.**

Authenticating the removable power source **16** advantageously allows the manufacturer of the mobile wireless communications device **10** to ensure that the correct removable power source **16** is used. For example, there may be removable power sources **16** that fit within the removable power source receiving cavity **14,** but do not provide the proper current or voltage and may degrade the performance or the operability of the mobile wireless communications device **10.** Authentication would help prevent the incorrect removable power source being used. In addition, authentication helps prevent unapproved and potentially dangerous or harmful removable power sources from being used.

NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters, typically 4 cm or less, but other suitable versions of near-field communication which may have different operating frequencies, effective ranges, etc., for example, may also be used.

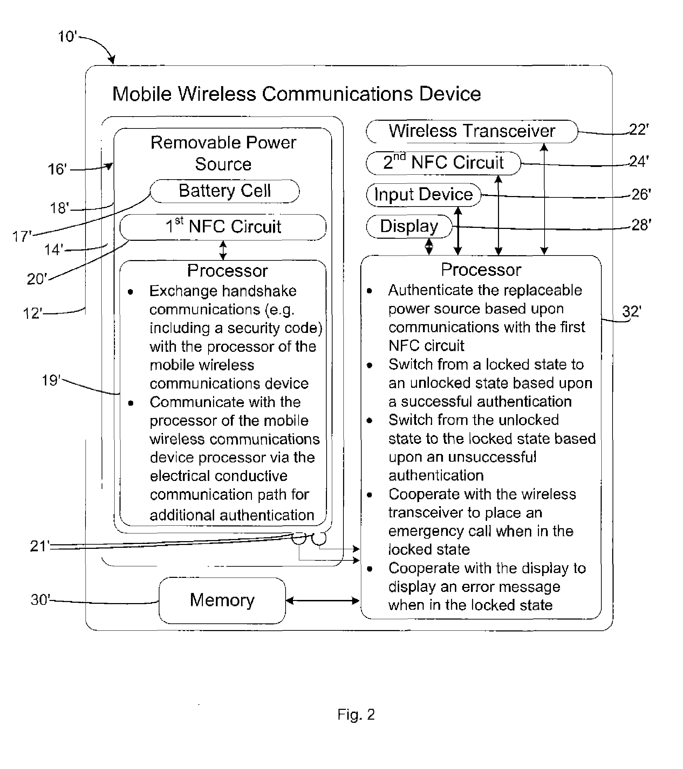

Referring now to FIG. 2, a more detailed embodiment of the mobile wireless communications device **10'** is now described. Here, the removable power source **18'** includes at least one battery cell **17',** and a processor **19'** coupled to the first NFC circuit **20'.** The battery cell **17'** may comprise a rechargeable lithium-ion cell, for example.

The mobile wireless communications device **10'** also includes a wireless transceiver **22'**, input device **26'**, display **28'**, and memory **30'** coupled to a processor **32'**. The memory **30'** may include both volatile portions, such as Random Access Memory (RAM), and non-volatile portions, such as Flash RAM, in some applications. The display **28'** is typically an Organic Light Emitting Diode (OLED) display, but may also be a Liquid Crystal Display (LCD) or other suitable display. The input device **26'** may be a keyboard, touch sensitive pad, trackball, or thumbwheel, for example. In addition, the input device **26'** may include any number of separate components, such as a keyboard and a touch sensitive pad. Further, it should be appreciated that the display **28'** may be a touch sensitive display and may therefore act as at least a portion of the input device **26'**. The wireless transceiver **22'** may include a cellular transceiver or a WLAN transceiver, for example, and the processor **32'** may cooperate with the wireless transceiver for wireless communications.

The processor **32'** authenticates the removable power source **16'** based upon communications between the second NFC circuit **24'** and first NFC circuit **20'**. These NFC communications may be handshaking communications and may include the exchange of a security code. For example, during these NFC communications, the processor **19'** may send the security code, via the first NFC circuit **20'**, to the processor **32'.** The processor **32'** compares the security code to a stored code to authenticate the removable power source **16'**.

The processor **32'** is switchable between a locked state and an unlocked state. Generally, when operating in the unlocked state, the processor **32'** performs a variety of device functions. However, when operating in the locked state, the processor **32'** performs merely a limited number of device functions. For example, when in the locked state, the processor **32'** may display an error message on the display **28'**, and may not perform other device functions regardless of the input received via the input device **26'**.

Additionally, in some applications when in the locked state, the processor **32'** may permit the placement of an emergency call (i.e. 911) via the wireless transceiver **22'**. The processor **32'** may not perform other device functions, however, such as messaging and wireless communications, other than placing the emergency call when in the locked state.

The processor **32'** may switch from the unlocked state to the locked state based upon an unsuccessful authentication, and may switch from the locked state to the unlocked state based upon a successful authentication.

In some applications, there may be an electrically conductive communications path **21'** between the processor **19'** and the processor **32'**. This path permits wired communications between the processor **19'** and the processor **32'**, and may be used for additional authentication of the removable power source **16'**.

For example, the processor **32'** may generate a challenge and a response, and then transmit the challenge to the processor **19'** via the electrically conductive communications path **21'**. The processor **19'** generates a power source response and transmits the power source response to the processor **32'** processor via the electrically conductive communications path **21'**. The power source response may be generated based upon a cryptographic routine. The processor **32'** authenticates the removable power source **16'** based upon the power source response matching a stored response. For further details of this authentication via the electrically conductive communications path **21'**, see U.S. Pat. No. 7,697,957 to Pattenden et al., the contents of which are hereby incorporated by reference in their entirety.

Those elements not specifically discussed are similar to those of the mobile wireless communications device **10** of FIG. 1 as described above and require no further discussion herein.

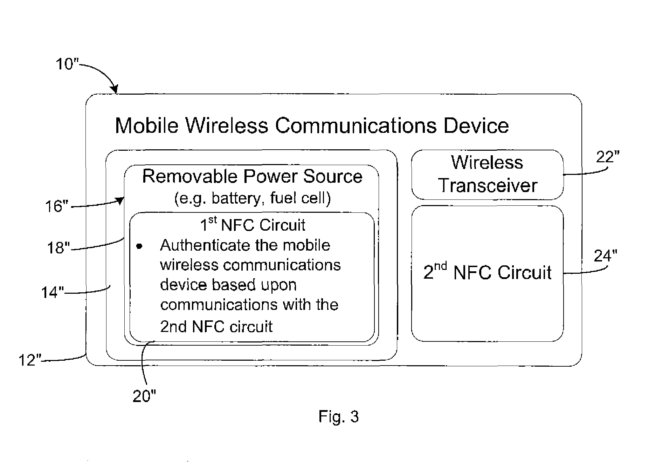

With reference to FIG. 3, another embodiment of the mobile wireless communications device **10"** is now described. Here, the first NFC circuit **20"** is configured to authenticate the mobile wireless communications device **10"** based upon communications with the second NFC circuit **24".** That is, rather than the processor **32** determining authentication of the mobile wireless communications device **10"** based upon communications between the first and second NFC circuits **20", 24",** the first NFC circuit determines authentication of the mobile wireless communications device based upon communications between the first and second NFC circuits. The first NFC circuit **20"** may then send notice of the authentication to the processor **32"** of the mobile wireless communications device **10".**

Various power saving features may optionally be implemented by the mobile wireless communications device **10** in example embodiments. For example, the second NFC circuit **24** may pulse or scan to detect the first NFC circuit **20** of the replaceable power source **16** for authentication, e.g., in an active NFC communication mode. If there is a match (i.e., authentication occurs), then there is no need for the second NFC circuit **24** to continue searching or scanning for power source authentication, and the first NFC circuit **20** may be powered down, or pulsing may occur at a lower frequency (e.g., to search for other NFC devices,) etc. For example, a relatively quick scan from the second NFC circuit **24** to detect the first NFC circuit **20** may be performed upon being powered up, etc. If there is a match (i.e., authentication), the second NFC circuit **24** may switch to a power saving mode (e.g., a passive NFC mode, less frequent pulses, pulses of shorter duration, etc.). If there is no authentication, the mobile wireless communications device **10** may be switched to the locked state (e.g., prevented from booting up upon being powered on), as described further above.

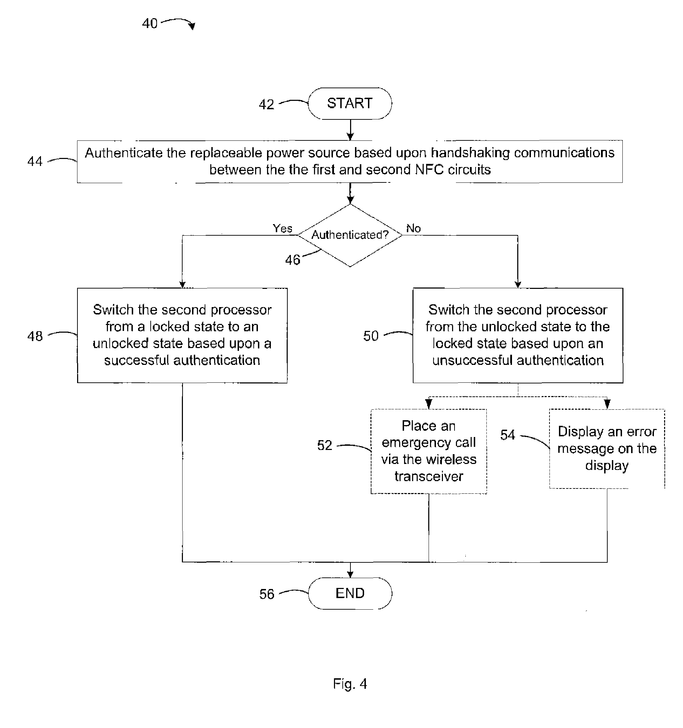

A method of operating the mobile wireless communications device **10** (of FIG. 1) is now described with reference to flowchart **40** of FIG. 4. After the start (Block **42**), the processor **32** authenticates the removable power source **16** based upon handshaking communications between the first and second NFC circuits **20, 24** (Block **44**). At Block **46,** if the removable power source **16** has been authenticated, the processor **32** is switched from the locked state to the unlocked state (Block **48**). If the removable power source **16** has not been authenticated at Block **46,** the processor **32** is switched from the unlocked state to the locked state (Block **50**). The processor **32** may then optionally place an emergency call via the wireless transceiver **22** (Block **52),** or display an error message on the display (Block **54**). Block **56** indicates the end of the method.

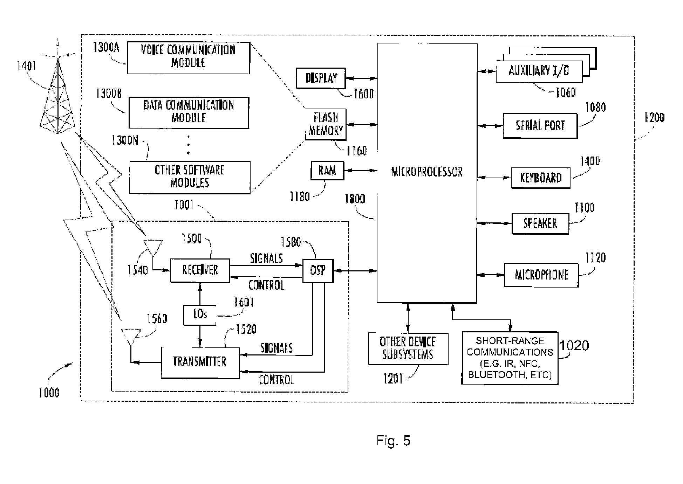

Example components of a mobile wireless communications device **1000** that may be used in accordance with the above-described embodiments are further described below with reference to FIG. 5. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 5. These include a communications subsystem **1001;** a short-range communications subsystem **1020;** the keypad **1400** and the display **1600,** along with other input/output devices **1060, 1080, 1100** and **1120;** as well as memory devices **1160**, **1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device 1060, such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (10) comprising:
a housing (12);
a wireless transceiver (22) carried by said housing; and
a removable power source (16) capable of being carried by said housing, said removable power source comprising a first Near Field Communications, NFC, circuit (20);
**characterised in that** the mobile wireless communications device further comprises a second NFC circuit (24) carried by said housing, said second NFC circuit being configured to authenticate said removable power source as providing a proper voltage or current for the mobile wireless communications device based upon communication with said first NFC circuit.

2. The mobile wireless communications device of Claim 1, further comprising a processor (32') carried by said housing and coupled to said second NFC circuit, said processor being configured to switch from a locked state to an unlocked state based upon a successful authentication of said removable power source.

3. The mobile wireless communications device of Claim 1, further comprising a processor carried by said housing and coupled to said second NFC circuit, said processor being configured to switch from an unlocked state to a locked state based upon an unsuccessful authentication of said removable power source.

4. The mobile wireless communications device of Claim 1, further comprising a processor carried by said housing and coupled to said second NFC circuit, said processor being configured to cooperate with said wireless transceiver to place an emergency call when said processor that is carried by said housing is switched to a locked state.

5. The mobile wireless communications device of Claim 1, further comprising:
a display (28') carried by said housing; and
a processor carried by said housing and coupled to said second NFC circuit, said processor being configured to cooperate with said display to display an error message when switched to a locked state.

6. The mobile wireless communications device of Claim 1, further comprising a processor coupled to said second NFC circuit and carried by said housing; and wherein said processor is configured to exchange handshake communications with said removable power source.

7. The mobile wireless communications device of Claim 6, wherein the handshake communications comprise a security code.

8. The mobile wireless communications device of Claim 1, further comprising:
a first processor (19') coupled to said first NFC circuit;
a second processor (32') coupled to said second NFC circuit; and
an electrical conduction communication path (21') between said first processor and second said processor for additional authentication of said removable power source.

9. The mobile wireless communications device of Claim 1, wherein said housing defines a cavity capable of receiving the removable power source; and wherein said removable power source is removably positioned within the cavity.

10. The mobile wireless communications device of Claim 1, wherein said removable power source further comprises:
a sealed battery casing containing said first NFC circuit; and
at least one rechargeable battery cell (17') carried by said sealed battery casing.

11. A method on a mobile wireless communications device (10) having a housing (12) carrying a wireless transceiver (22) and a removable power source (16), the removable power source comprising a first Near Field Communications, NFC, circuit (20), the method **characterised by** comprising:
authenticating the removable power source as providing a proper voltage or current for the mobile wireless communications device based upon communications between a second NFC circuit carried by the housing and the first NFC circuit.

12. The method of Claim 11, wherein the mobile wireless communications device further comprises a processor (32') carried by the housing and coupled to the second NFC circuit; and wherein the method further comprises switching the processor from a locked state to an unlocked state based upon a successful authentication of the removable power source.

13. The method of Claim 11, wherein the mobile wireless communications device further comprises a processor carried by the housing and coupled to the second NFC circuit; and wherein the method further comprises switching the processor from an unlocked state to a locked state based upon an unsuccessful authentication of the removable power source.

14. The method of Claim 11, wherein the mobile wireless communications device further comprises a processor carried by the housing and coupled to the second NFC circuit; and wherein the method further comprises placing an emergency call via the wireless transceiver when the processor carried by the housing is in a locked state.

15. The method Claim 11, wherein the mobile wireless communications device further comprises a display (28'), and a processor (32') carried by the housing and coupled to the second NFC circuit and the display; and wherein the method further comprises displaying an error message on the display when the processor is in a locked state.

## Patentansprüche

1. Mobile drahtlose Kommunikationsvorrichtung (10), die aufweist:
ein Gehäuse (12);
einen drahtlosen Transceiver (22), der von dem Gehäuse getragen wird; und
eine entfernbare Energiequelle (16), die von dem Gehäuse getragen werden kann, wobei die entfernbare Energiequelle eine erste Nahbereichskommunikation(NFC - Near Field Communications)-Schaltung (20) aufweist;
**dadurch gekennzeichnet, dass** die mobile drahtlose Kommunikationsvorrichtung weiter eine zweite NFC-Schaltung (24) aufweist, die von dem Gehäuse getragen wird, wobei die zweite NFC-Schaltung konfiguriert ist zum Authentifizieren der entfernbaren Energiequelle als eine geeignete Spannung oder einen Strom für die mobile drahtlose Kommunikationsvorrichtung vorsehend basierend auf einer Kommunikation mit der ersten NFC-Schaltung.

2. Die mobile drahtlose Kommunikationsvorrichtung gemäß Anspruch 1, die weiter einen Prozessor (32') aufweist, der von dem Gehäuse getragen wird und mit der zweiten NFC-Schaltung gekoppelt ist, wobei der Prozessor konfiguriert ist zum Schalten von einem verriegelten Zustand in einen entriegelten Zustand basierend auf einer erfolgreichen Authentifizierung der entfernbaren Energiequelle.

3. Die mobile drahtlose Kommunikationsvorrichtung gemäß Anspruch 1, die weiter einen Prozessor aufweist, der von dem Gehäuse getragen wird und mit der zweiten NFC-Schaltung gekoppelt ist, wobei der Prozessor konfiguriert ist zum Schalten von einem entriegelten Zustand in einen verriegelten Zustand basierend auf einer nicht-erfolgreichen Authentifizierung der entfernbaren Energiequelle.

4. Die mobile drahtlose Kommunikationsvorrichtung gemäß Anspruch 1, die weiter einen Prozessor aufweist, der von dem Gehäuse getragen wird und mit der zweiten NFC-Schaltung gekoppelt ist, wobei der Prozessor konfiguriert ist zum Zusammenarbeiten mit dem drahtlosen Transceiver, um einen Notruf zu tätigen, wenn der Prozessor, der von dem Gehäuse getragen wird, in einen verriegelten Zustand geschaltet ist.

5. Die mobile drahtlose Kommunikationsvorrichtung gemäß Anspruch 1, die weiter aufweist:
eine Anzeige (28'), die von dem Gehäuse getragen wird; und
einen Prozessor, der von dem Gehäuse getragen wird und mit der zweiten NFC-Schaltung gekoppelt ist, wobei der Prozessor konfiguriert ist zum Zusammenarbeiten mit der Anzeige, um eine Fehlermeldung anzuzeigen, wenn in einen verriegelten Zustand geschaltet.

6. Die mobile drahtlose Kommunikationsvorrichtung gemäß Anspruch 1, die weiter einen Prozessor aufweist, der mit der zweiten NFC-Schaltung gekoppelt ist und von dem Gehäuse getragen wird; und wobei der Prozessor konfiguriert ist zum Austauschen von Handshake-Kommunikationen mit der entfernbaren Energiequelle.

7. Die mobile drahtlose Kommunikationsvorrichtung gemäß Anspruch 6, wobei die Handshake-Kommunikationen einen Sicherheitscode aufweisen.

8. Die mobile drahtlose Kommunikationsvorrichtung gemäß Anspruch 1, die weiter aufweist:
einen ersten Prozessor (19'), der mit der ersten NFC-Schaltung gekoppelt ist;
einen zweiten Prozessor (32'), der mit der zweiten NFC-Schaltung gekoppelt ist; und
einen elektrischen Leitungskommunikationspfad (21') zwischen dem ersten Prozessor und dem zweiten Prozessor für eine zusätzliche Authentifizierung der entfernbaren Energiequelle.

9. Die mobile drahtlose Kommunikationsvorrichtung gemäß Anspruch 1, wobei das Gehäuse einen Hohlraum definiert, der die entfernbare Energiequelle aufnehmen kann; und wobei die entfernbare Energiequelle entfernbar in dem Hohlraum positioniert ist.

10. Die mobile drahtlose Kommunikationsvorrichtung gemäß Anspruch 1, wobei die entfernbare Energiequelle weiter aufweist:
ein abgedichtetes Batteriegehäuse, das die erste NFC-Schaltung enthält; und
zumindest eine wiederaufladbare Batteriezelle (17'), die von dem abgedichteten Batteriegehäuse getragen wird.

11. Ein Verfahren auf einer mobilen drahtlosen Kommunikationsvorrichtung (10) mit einem Gehäuse (12), das einen drahtlosen Transceiver (22) und eine entfernbare Energiequelle (16) trägt, wobei die entfernbare Energiequelle eine erste Nahbereichskommunikation(NFC - Near Field Communication)-Schaltung (20) aufweist, wobei das Verfahren **gekennzeichnet ist durch** aufweisend:
Authentifizieren der entfernbaren Energiequelle als eine geeignete Spannung oder einen Strom für die mobile drahtlose Kommunikationsvorrichtung vorsehend basierend auf einer Kommunikation zwischen einer zweiten NFC-Schaltung, die von dem Gehäuse getragen wird, und der ersten NFC-Schaltung.

12. Das Verfahren gemäß Anspruch 11, wobei die mobile drahtlose Kommunikationsvorrichtung weiter einen Prozessor (32') aufweist, der von dem Gehäuse getragen wird und mit der zweiten NFC-Schaltung gekoppelt ist; und wobei das Verfahren weiter aufweist ein Schalten des Prozessors von einem verriegelten Zustand in einen entriegelten Zustand basierend auf einer erfolgreichen Authentifizierung der entfernbaren Energiequelle.

13. Das Verfahren gemäß Anspruch 11, wobei die mobile drahtlose Kommunikationsvorrichtung weiter einen Prozessor aufweist, der von dem Gehäuse getragen wird und mit der zweiten NFC-Schaltung gekoppelt ist; und wobei das Verfahren weiter aufweist ein Schalten des Prozessors von einem entriegelten Zustand in einen verriegelten Zustand basierend auf einer nicht-erfolgreichen Authentifizierung der entfernbaren Energiequelle.

14. Das Verfahren gemäß Anspruch 11, wobei die mobile drahtlose Kommunikationsvorrichtung weiter einen Prozessor aufweist, der von dem Gehäuse getragen wird und mit der zweiten NFC-Schaltung gekoppelt ist; und wobei das Verfahren weiter aufweist ein Tätigen eines Notrufs über den drahtlosen Transceiver, wenn der Prozessor, der von dem Gehäuse getragen wird, in einem verriegelten Zustand ist.

15. Das Verfahren gemäß Anspruch 11, wobei die mobile drahtlose Kommunikationsvorrichtung weiter eine Anzeige (28') und einen Prozessor aufweist, der von dem Gehäuse getragen wird und mit der zweiten NFC-Schaltung und der Anzeige gekoppelt ist; und wobei das Verfahren weiter aufweist ein Anzeigen einer Fehlermeldung auf der Anzeige, wenn der Prozessor in einem verriegelten Zustand ist.

## Revendications

1. Dispositif de communications sans fil mobile (10), comprenant :
un boîtier (12) ;
un émetteur-récepteur sans fil (22) porté par ledit boîtier ; et
une source d'alimentation amovible (16) capable d'être portée par ledit boîtier, ladite source d'alimentation amovible comprenant un premier circuit de Communications en Champ Proche, NFC (20) ;
**caractérisé en ce que** le dispositif de communications sans fil mobile comprend en outre un deuxième circuit NFC (24) porté par ledit boîtier, ledit deuxième circuit NFC étant configuré pour authentifier ladite source d'alimentation amovible comme fournissant un courant ou une tension approprié(e) pour le dispositif de communications sans fil mobile sur la base d'une communication avec ledit premier circuit NFC.

2. Dispositif de communications sans fil mobile de la revendication 1, comprenant en outre un processeur (32') porté par ledit boîtier et couplé audit deuxième circuit NFC, ledit processeur étant configuré pour commuter d'un état verrouillé à un état déverrouillé sur la base d'une authentification réussie de ladite source d'alimentation amovible.

3. Dispositif de communications sans fil mobile de la revendication 1, comprenant en outre un processeur porté par ledit boîtier et couplé audit deuxième circuit NFC, ledit processeur étant configuré pour commuter d'un état déverrouillé à un état verrouillé sur la base d'une authentification échouée de ladite source d'alimentation amovible.

4. Dispositif de communications sans fil mobile de la revendication 1, comprenant en outre un processeur porté par ledit boîtier et couplé audit deuxième circuit NFC, ledit processeur étant configuré pour coopérer avec ledit émetteur-récepteur sans fil pour effectuer un appel d'urgence lorsque ledit processeur qui est porté par ledit boîtier est commuté à un état verrouillé.

5. Dispositif de communications sans fil mobile de la revendication 1, comprenant en outre :
un dispositif d'affichage (28') porté par ledit boîtier ; et
un processeur porté par ledit boîtier et couplé audit deuxième circuit NFC, ledit processeur étant configuré pour coopérer avec ledit dispositif d'affichage pour afficher un message d'erreur lorsqu'il est commuté à un état verrouillé.

6. Dispositif de communications sans fil mobile de la revendication 1, comprenant en outre un processeur couplé audit deuxième circuit NFC et porté par ledit boîtier ; et dans lequel ledit processeur est configuré pour échanger des communications d'établissement de liaison avec ladite source d'alimentation amovible.

7. Dispositif de communications sans fil mobile de la revendication 6, dans lequel les communications d'établissement de liaison comprennent un code de sécurité.

8. Dispositif de communications sans fil mobile de la revendication 1, comprenant en outre :
un premier processeur (19') couplé audit premier circuit NFC ;
un deuxième processeur (32') couplé audit deuxième circuit NFC ; et
une voie de communication de conduction électrique (21') entre ledit premier processeur et ledit deuxième processeur pour une authentification supplémentaire de ladite source d'alimentation amovible.

9. Dispositif de communications sans fil mobile de la revendication 1, dans lequel ledit boîtier définit une cavité capable de recevoir la source d'alimentation amovible ; et dans lequel ladite source d'alimentation amovible est positionnée de manière amovible dans la cavité.

10. Dispositif de communications sans fil mobile de la revendication 1, dans lequel ladite source d'alimentation amovible comprend en outre :
un logement de batterie étanche contenant ledit premier circuit NFC ; et
au moins un élément de batterie rechargeable (17') porté par ledit logement de batterie étanche.

11. Procédé sur un dispositif de communications sans fil mobile (10) ayant un boîtier (12) portant un émetteur-récepteur sans fil (22) et une source d'alimentation amovible (16), la source d'alimentation amovible comprenant un premier circuit de Communications en Champ Proche NFC (20), le procédé étant **caractérisé en ce qu'**il comprend le fait :
d'authentifier la source d'alimentation amovible à mesure comme fournissant un courant ou une tension approprié(e) pour le dispositif de communications sans fil mobile sur la base de communications entre un deuxième circuit NFC porté par le boîtier et le premier circuit NFC.

12. Procédé de la revendication 11, dans lequel le dispositif de communications sans fil mobile comprend en outre un processeur (32') porté par le boîtier et couplé au deuxième circuit NFC ; et dans lequel le procédé comprend en outre la commutation du processeur d'un état verrouillé à un état déverrouillé sur la base d'une authentification réussie de la source d'alimentation amovible.

13. Procédé de la revendication 11, dans lequel le dispositif de communications sans fil mobile comprend en outre un processeur porté par le boîtier et couplé au deuxième circuit NFC ; et dans lequel le procédé comprend en outre la commutation du processeur d'un état déverrouillé à un état verrouillé sur la base d'une authentification échouée de la source d'alimentation amovible.

14. Procédé de la revendication 11, dans lequel le dispositif de communications sans fil mobile comprend en outre un processeur porté par le boîtier et couplé au deuxième circuit NFC ; et dans lequel le procédé comprend en outre le fait d'effectuer un appel d'urgence par l'intermédiaire de l'émetteur-récepteur sans fil lorsque le processeur porté par le boîtier est dans un état verrouillé.

15. Procédé de la revendication 11, dans lequel le dispositif de communications sans fil mobile comprend en outre un dispositif d'affichage (28'), et un processeur (32') porté par le boîtier et couplé au deuxième circuit NFC et au dispositif d'affichage ; et dans lequel le procédé comprend en outre le fait d'afficher un message d'erreur sur le dispositif d'affichage lorsque le processeur est dans un état verrouillé.
